# FASCICULE DE BREVET EUROPEEN

(11) **EP 1 610 087 B1**
(45) Date de publication et mention de la délivrance du brevet: **20.01.2010**
(21) Numéro de dépôt: 04102867.1
(22) Date de dépôt: 22.06.2004
(51) Int. Cl.: G01B 5/012, G01B 7/012, G01B 11/00

(54) **Palpeur avec déclencheur**
Tastsonde
Touch probe

(43) Date de publication de la demande: 28.12.2005
(73) Titulaire: TESA SA, 1020 Renens (CH)
(72) Inventeur: Rouge, Claude, 1197, Prangins (CH); Jordil, Pascal, 1612, Ecoteaux (CH)
(74) Mandataire: P&TS Patents & Technology Surveys SA

(56) Documents cités:
- EP-A- 0 764 827
- WO-A-95/22739
- DE-A- 3 713 415
- DE-C- 4 341 192
- DE-U- 20 006 504
- US-A1- 2003 101 609

## Description

### Domaine technique

La présente invention se rapporte au domaine des palpeurs pour mesurer des cordonnées, et notamment, à un palpeur à déclenchement basé sur le principe de la liaison de Boys apte à être utilisé comme accessoire d'une machine pour mesurer des cordonnées en trois dimensions.

### Etat de la technique

Les palpeurs à déclenchement sont des éléments de mesure électromécaniques utilisés largement, mais pas uniquement, sur les lignes de production de pièces mécaniques, par exemple pour le réglage des machines de production ou pour les contrôles de qualité. Ils servent à la vérification précise de dimensions, ou au contrôle de la régularité d'une surface ou d'un lot de production.

Les palpeurs à déclenchement sont habituellement fixés sur le bras mobile d'une machine à mesurer dont la position est déterminée avec précision à l'aide de systèmes de mesure par exemple capacitifs, inductifs, magnétorésistifs ou optiques. Le bras de la machine à mesurer est déplacé dans l'espace selon une trajectoire déterminée jusqu'à ce que la touche du palpeur entre en contact avec la pièce ou la surface à mesurer. Lors du contact, une force de déflexion est appliquée sur la touche, la sortant ainsi de sa position initiale de repos. Un circuit électrique est alors soit fermé, soit ouvert et un signal est généralement envoyé d'une part à l'utilisateur, par exemple sous forme de signal lumineux, d'autre part au logiciel de la machine à mesurer qui détermine ainsi, à l'aide des données du système de mesure, les coordonnées du point de contact dans un référentiel donné. Le logiciel permet ensuite de calculer la distance entre deux points de mesure et, dans certains cas, de représenter un objet à mesurer en deux ou trois dimensions à l'aide d'une série de points de mesure.

Dans une autre application les palpeurs à déclenchement servent au contrôle de la régularité d'une surface ou d'un lot de production. Un palpeur est fixé sur un élément immobile et une surface ou une série de pièces défile devant le palpeur de façon à effleurer la touche. Si la surface présente des irrégularités ou si les pièces ne sont pas de dimension régulière, la touche du palpeur sera soumise à une force qui la fera sortir de sa position de repos, modifiant ainsi le signal émis par le circuit électrique du palpeur.

Les éléments principaux d'un palpeur à déclenchement sont habituellement un organe fixe, une touche et un circuit électrique servant à la détection des mouvements de la touche par rapport à sa position de repos.

L'organe fixe est fixe par rapport à l'élément de fixation, l'élément de fixation étant généralement incorporé au boîtier du palpeur et permettant de fixer le palpeur, par exemple sur le bras mobile d'une machine à mesurer.

La touche est l'élément mécanique destiné à entrer en contact avec la surface ou la pièce à mesurer. La touche comporte généralement une sphère de contact calibrée en rubis ou en pierre dure fixé à l'extrémité d'une tige droite ou coudée laquelle est maintenue par un élément élastique dans une position de repos par rapport à l'organe fixe. Cette position de repos est déterminée et reproductible. La touche possède un ou plusieurs degrés de liberté par rapport à l'organe fixe. Lors du contact avec la surface à mesurer, une force de déflexion est exercée sur la touche qui sort de sa position de repos suivant un ou plusieurs de ses degrés de liberté par rapport à l'organe fixe. Lorsque la force n'est plus appliquée sur la touche, cette dernière retourne dans sa position de repos.

On comprendra donc aisément que le la précision et la répétabilité de positionnement de la touche par rapport à l'organe fixe jouent un rôle essentiel dans l'exactitude de la mesure.

Classiquement, comme divulgué, par exemple par le document US2003101609, les palpeurs à déclenchement comprennent une liaison isostatique entre la touche et l'organe fixe. Cette liaison comporte six points de contact indépendants, de manière à déterminer exactement la position relative de la touche par rapport à l'organe fixe. En général les six points de contact sont réalisés par trois goupilles en métal dur, orientées à 120° entre elles, chaque goupille s'appuyant entre deux sphères solidaires de l'organe fixe du palpeur. Les sphères sont connectées électriquement pour former un circuit comportant six interrupteurs en série afin de signaler le contact de la touche avec la pièce à mesurer.

Cette disposition présente toutefois l'inconvénient que la sensibilité de la touche à une force transversale n'est pas constante, mais varie selon l'orientation de la force externe, et notamment dans le cas de forces latérales, orientées selon un plan orthogonal à l'axe de la touche.

La sensibilité de ce type de palpeur aux forces latérales n'est donc pas uniforme, mais présente trois lobes en correspondance des directions des trois goupilles. Cette variation de la sensibilité est préjudiciable à la répétabilité du déclenchement et donc à la qualité de la mesure.

La demande de brevet EP0360853 tente de remédier à ces problèmes en proposant un palpeur dans lequel le circuit électrique est remplacé par des jauges de contrainte, directement sensibles à la force appliquée. Ce dispositif présente une réponse symétrique. Toutefois l'usage des jauges de contraintes est plus complexe et coûteux à réaliser que les palpeurs à déclenchement mécaniques.

La demande de brevet EP0764827 décrit un palpeur dans lequel une position de repos est définie par six billes fixées aux bouts des bras d'une étoile à six pointes.

DE3713415, DE20006504 et DE4341192 concernent des palpeurs à déclenchement dans lequel la position de repos de la touche est définie par un nombre de points de contact supérieur à six.

W09522739 décrit un palpeur à déclenchement dans lequel le support de la touche comporte deux couronnes de billes s'engageant entre-elles, et aussi en contact avec une surface annulaire, déterminant trois points de contact par bille. Ce palpeur ne comporte pas de circuit électrique passant par les billes, mais utilise un interrupteur separé.

Un but de la présente invention est de proposer un palpeur à déclenchement exempt des inconvénients de l'art antérieur.

Un autre but de la présente invention est de proposer un palpeur à déclenchement simple et fiable et présentant une sensibilité constante aux forces latérales.

Ces buts sont atteint par le palpeur qui est l'objet de la revendication indépendante.

La présente invention dérive de l'observation que la sensibilité du déclencheur aux forces latérales peut être uniformisée en choisissant judicieusement l'emplacement des points de contact. En particulier il est possible de distribuer les points de contact dans une disposition ayant une symétrie hexagonale, par rotations de 60°. En revanche la distribution des points de contact dans les déclencheurs connus est symétrique par rotations de 120°. Dans une telle disposition la sensibilité du palpeur aux forces latérales est pratiquement constante.

La présente invention sera mieux comprise à la lecture de la description donnée à titre d'exemple et illustrée par les figures annexées.

### Description des dessins

La figure 1 représente un palpeur à déclenchement de type connu.
La figure 2 représente un schéma simplifié du système de repositionnement du palpeur de la figure 1 ;
La figure 3 représente un schéma simplifié du système de repositionnement d'un palpeur selon l'invention.
La figure 4 représente une variante du système de repositionnement d'un palpeur selon l'invention.
Les figures 5 et 6 représentent une variante ultérieure du système de repositionnement d'un palpeur selon l'invention.
Les figures 7 et 8 représentent en vue et en coupe un mode ultérieur de réalisation de l'invention.

### Description détaillée de l'invention

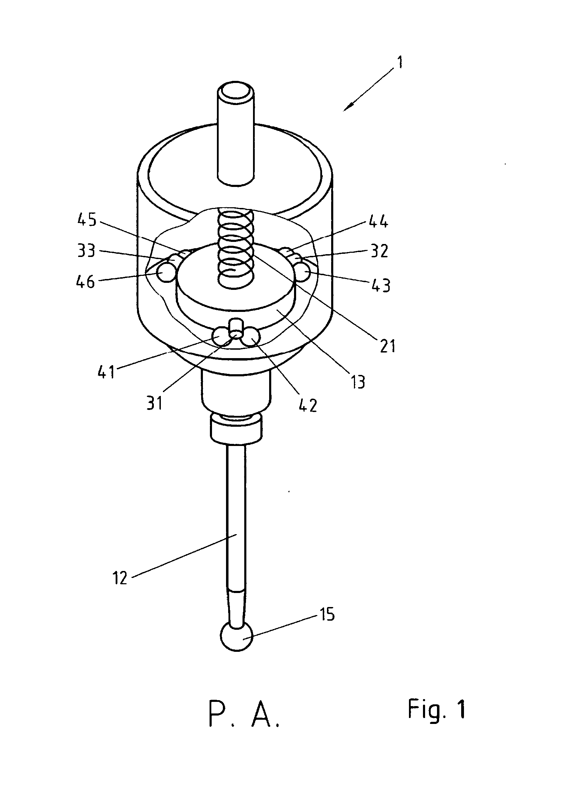

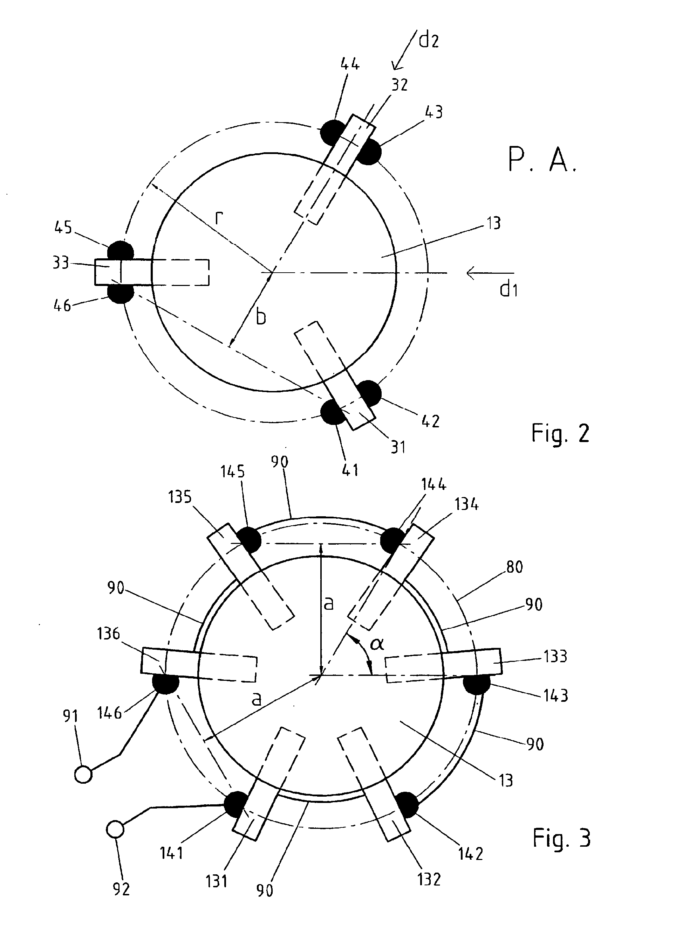

Les figures 1 et 2 représentent un palpeur à déclenchement de type connu. Une touche de palpage 12 comporte à une extrémité une sphère 15 dont le diamètre est déterminé exactement et destinée à contacter la pièce à mesurer. La tige de palpage est solidaire du plateau 13, maintenu en position par les goupilles 31, 32, 33, s'appuyant sur les sphères 41-46 sous l'action du ressort 21.

La position de repos de la touche est déterminée de façon exacte et reproductible par les six points de contact entre les goupilles 31-33 et les sphères 41-46, selon le principe de la liaison de Boys. Lorsque la sphère 15 est déplacée de sa position de repos, au moins un des six points de contact s'interrompt, et la variation de résistance du circuit électrique qui en suit permet la détection du contact.

Pour qu'un contact soit détecté, la composante verticale de la force exercée par le plateau 13 sur le ressort 21 doit dépasser la tension de ce dernier. On comprend aisément que, dans le cas d'une force latérale, ce seuil de détection n'est pas constant, mais dépend de l'orientation de la force. La force requise pour la détection sera supérieure pour un contact dans la direction d2 de la figure 2 que pour la direction d1.

Dans le cas d'une force selon la direction d2, l'axe de basculement de la touche se situe à une distance r du centre et, dans le cas d'une force de déflexion orientée selon la direction d1, le basculement a lieu à une distance b.

Le rapport théorique,sans considérer les forces de frottement, entre la force minimale et la force maximale requises pour déclencher la touche est donc donné par *r*/*b* = 1/cos60° = 2 .

La sensibilité de ce type de palpeur aux forces latérales n'est donc pas uniforme, mais présente trois lobes en correspondance des directions des trois goupilles.

La figure 3 représente le déclencheur d'un palpeur selon un premier mode de réalisation de l'invention. Dans le dispositif de la figure 3 la touche 12 se termine avec un plateau 13 sur la périphérie duquel sont disposées six goupilles radiales 131-136. En position de repos chaque goupille touche une sphère 141-146 solidaire de l'organe fixe du palpeur.

On peut constater que, dans le déclencheur de la figure 3, les six points de contact qui définissent la position de repos de la touche 12 sont distribués autour de l'axe de la touche 12, de manière à annuler la variation de la sensibilité par rapport à la direction de la force de déflexion latérales. Cette disposition plus symétrique permet une réponse plus uniforme par rapport au déclencheur représenté sur les figures 1 et 2, dans lequel les points de contact sont groupés en paires au vertex d'un triangle équilatère. La sensibilité du palpeur de l'invention aux forces latérales est essentiellement uniforme et ne dépend pas ou très peu de la direction de la force appliquée.

Des éléments conducteurs 90 relient les goupilles et les sphères pour réaliser un circuit électrique normalement fermé qui s'ouvre dès q'une quelconque des goupilles de détache de la sphère correspondante. On pourrait par exemple connecter les paires de goupilles 131-132, 133-134 et 135-136, ainsi que les sphères 142-143 et 144-145 comme il est représenté schématiquement sur la figure 3. Le contact avec la pièce à mesurer est détecté par la variation de la résistance aux bornes 91, 92 connectées aux sphères 141 et 146. D'autres dispositions sont toutefois possibles.

Les éléments conducteurs 90 peuvent être réalisé par des fils électriques soudés ou collés, ou par déposition d'une couche de peinture ou de colle conductrice, ou par tout autre procédé connu. L'isolation des sphères et des goupilles de leurs supports relatifs peut être obtenue par exemple par eloxage.

Avantageusement les points de contact sont disposés le long d'une circonférence 80 centrée autour de l'axe de la touche 12. L'écart angulaire α entre chaque paire de points de contact successifs est essentiellement égal à 60 °, en sorte que les points de contact se trouvent sur les vertex d'un hexagone centré autour de l'axe de la touche. Il est toutefois possible d'altérer légèrement cette disposition sans que la symétrie de la réponse du palpeur soit compromise. Il serait donc envisageable de disposer les points de contact selon une courbe différente ou modifier légèrement les écarts angulaires entre les points de contact.

Dans la disposition de la figure 3, la distance de basculement de la touche 12 est toujours égale à a pour toutes les forces latérales. Naturellement les forces de frottement empêchent d'atteindre exactement ce rapport idéal.

L'écart angulaire entre chaque paire de points de contact adjacents est de préférence exactement égal à 60° ou il est en tout cas proche de cette valeur, par exemple entre 40° et 80°, de préférence entre 50° et 70°.

Les sphères 141-146 sont disposées par rapport aux goupilles 131-136, de manière à ce que les trois sphères 142 144 et 146 précèdent les goupilles 132, 134 et respectivement 136 lorsque l'on parcourt la circonférence 80 en sens horaire, et les sphères 141, 143 et 145 suivent les goupilles 131, 133 et 135 dans le même parcours. Cette disposition alternée permet de définir une position de repos stable et précise. D'autres dispositions dans lesquelles une partie de sphères 141-146 précède les goupilles131-136 et une autre partie des sphères 141-146 suit les goupilles 131-136 sont toutefois possibles dans le cadre de la présente invention.

Optionnellement, les goupilles et les sphères peuvent être remplacées par d'autres éléments de positionnement aptes à définir six contacts ponctuels entre l'organe fixe 1 et le plateau 12 de la touche 13. Par exemple les goupilles pourraient être remplacées par des plans inclinés.

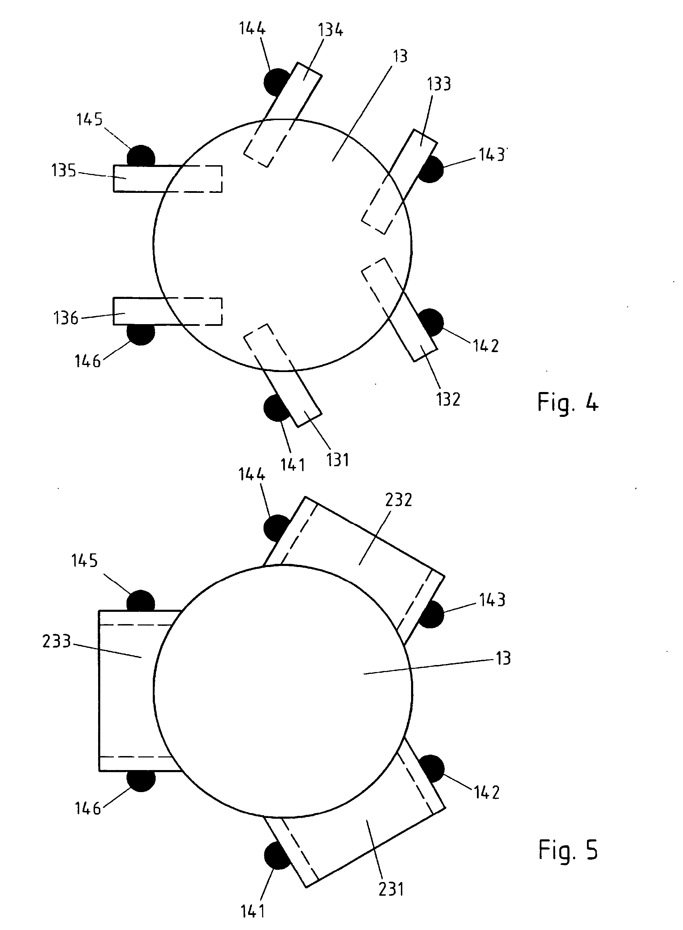

Les goupilles 131-136 du palpeur de la figure 3 sont disposées essentiellement radialement par rapport à l'axe de la touche 12. Dans un mode ultérieur de l'invention, représenté sur la figure 4, les goupilles 131-136 sont disposées en paires parallèles, selon trois directions, essentiellement écartées angulairement de 120 ° entre elles.

Dans un autre mode de réalisation de l'invention. représenté sur la figure 5, le plateau 13 porte à sa périphérie trois plots 231, 232, 233, arrangés essentiellement à 120° et chaque plot touche deux des sphères 141-146 de l'organe fixe. Les six points de contact entre les plots 231-233 et les sphères 141-146 sont distribués autour de l'axe de la touche 12 de manière à obtenir une sensibilité uniforme aux forces latérales. Avantageusement les points de contact sont placés aux vertex d'un hexagone centré par rapport à l'axe de la touche 12.

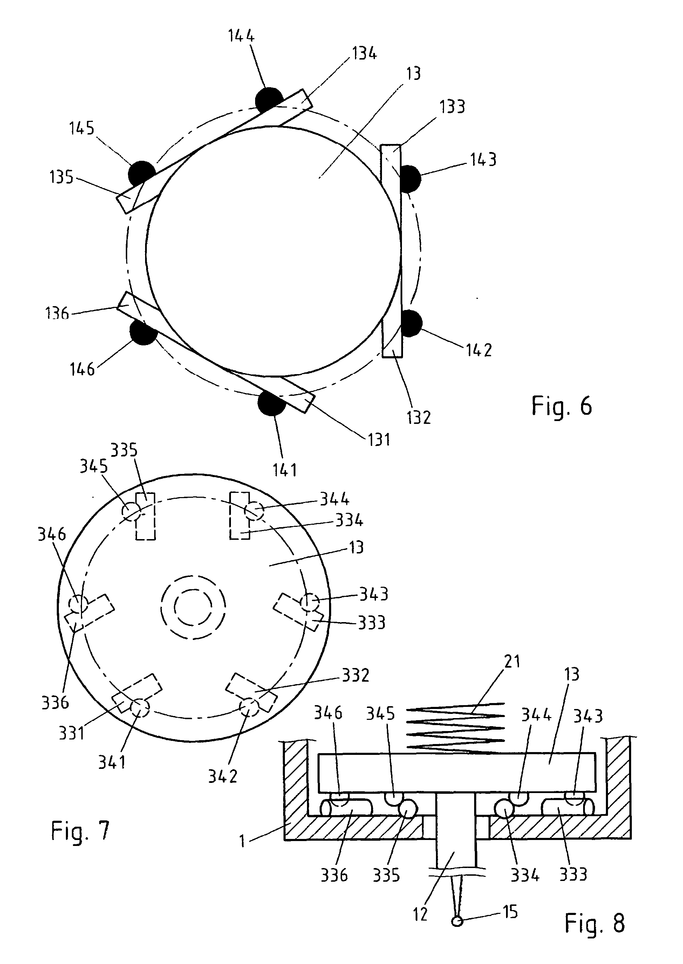

Dans la variante d'exécution de l'invention représentée sur la figure 6, les goupilles 131-136 sont arrangées en trois paires de goupilles convergentes vers l'extérieur du plateau 13, dans une disposition essentiellement symétrique par rotation de 120°. Les six points de contact entre les goupilles 131-136 et les sphères 141-146 sont distribués autour de l'axe de la touche 12 de manière d'obtenir une sensibilité uniforme aux forces latérales. Ils sont placés de préférence aux vertex d'un hexagone centré par rapport à l'axe de la touche 12.

Les variantes d'exécution représentées aux figures 3, 4, 6 se différencient par une rotation des goupilles 131-136 autour des points de contact respectifs avec les billes 141-146. Il ne faut pas interpréter ces exemples dans le sens que l'invention se limite à ces angles spécifiques d'orientation des goupilles par rapport aux billes. La présente invention comprend aussi beaucoup d'autres dispositions, caractérisées par n'importe quel angle entre les goupilles 131-136 et les billes 141-146.

Il est aussi possible, dans le cadre de la présente invention, d'inverser la position des goupilles et des sphères, et de disposer les sphères sur le plateau 13 et les goupilles sur l'organe fixe 1, comme représenté sur la figure 8.

## Revendications

1. Palpeur comprenant :
un organe fixe (1);
une touche (12) maintenue par un élément élastique (21) dans une position déterminée de repos par rapport audit organe fixe, ladite position de repos pouvant être reproduite, ladite touche (12) pouvant se déplacer à partir de ladite position de repos en réponse à une force de déflexion et pouvant retourner à ladite position de repos lorsque ladite force cesse d'être appliquée ; une pluralité d'éléments de positionnement mobiles (131, 132, 133, 134, 135, 136, 231, 232, 233) solidaires de ladite touche (12) ; une pluralité d'éléments de positionnement fixes (141, 142, 143, 144, 145, 146) solidaires dudit organe fixe et engageables avec lesdits éléments de positionnement mobiles, pour définir six points de contact, comprenant une pluralité de conducteurs électriques (90) reliant des paires desdits éléments de positionnement fixes et éléments de positionnement mobiles pour former un circuit électrique dont la résistance se modifie lors d'un déplacement de ladite touche (12) de sa position de repos, lesdits six point de contact étant distribués autour de l'axe de ladite touche, dans lequel l'écart angulaire, en prenant comme centre l'axe de la touche (12), entre deux points de contact successifs est essentiellement identique pour chaque paire de points de contact successifs. (12), **caractérisé en ce que**, lesdits points de contact se succèdent le long d'une circonférence ou d'une courbe fermée centrée autour de l'axe de ladite touche (12) suivant laquelle une partie desdits éléments de positionnement fixes (141, 142, 143, 144, 145, 146) précède lesdits éléments de positionnement mobiles (131, 132, 133, 134, 135, 136, 231, 232, 233) et une partie desdits éléments de positionnement fixes (141, 142, 143, 144, 145, 146) suit lesdits éléments de positionnement mobiles.

2. Palpeur selon la revendication 1, ayant une sensibilité essentiellement uniforme aux forces de déflexion dans un plan orthogonal à ladite touche (12)

3. Palpeur selon la revendication 1, dans lequel ledit écart angulaire est essentiellement égal à 60 °.

4. Palpeur selon la revendication 1, dans lequel ledit écart angulaire est compris entre 50° et 70°.

5. Palpeur selon la revendication 1, dans lequel ledit écart angulaire est compris entre 40° et 80°.

6. Palpeur selon l'une des revendications précédentes, dans lequel lesdits éléments de positionnement mobiles comprennent six goupilles (131, 132, 133, 134, 135, 136), et dans lequel lesdits éléments de positionnement fixes comprennent six sphères (141, 142, 143, 144, 145, 146) solidaires dudit organe fixe (1), dans lequel, en position de repos, chacune desdites goupilles touche une desdites sphères.

7. Palpeur selon la revendication 6, dans lequel lesdites goupilles sont disposées radialement par rapport à l'axe de ladite touche (12).

8. Palpeur selon la revendication 6, dans lequel lesdites goupilles sont disposées en paires parallèles, selon trois directions, essentiellement écartées angulairement de 120 ° entre-elles.

9. Palpeur selon la revendication 6, dans lequel lesdites goupilles sont disposées en paires convergentes vers l'extérieur, dans une disposition essentiellement symétrique par rotations de 120 °.

10. Palpeur selon la revendication 6, dans lequel lesdites goupilles sont disposées en trois paires, dans une disposition essentiellement symétrique par rotations de 120 °, chaque paire comprenant deux desdites goupilles, chacune desquelles touche une desdites sphères.

11. Palpeur selon la revendication 10, dans lequel les goupilles de chaque paire touchent chacune une desdites sphères selon le même angle.

12. Palpeur selon l'une des revendications de 1 à 5, dans lequel lesdits éléments de positionnement mobiles comprennent six sphères (341, 342, 343, 344, 345, 346), et dans lequel lesdits éléments de positionnement fixes comprennent six goupilles (331, 332, 333, 334, 335, 336) solidaires dudit organe fixe (1), dans lequel, en position de repos, chacune desdites goupilles touche une desdites sphères.

13. Palpeur selon l'une des revendications de 1 à 5, dans lequel lesdits éléments de positionnement mobiles comprennent trois plots (231, 232, 233), et dans lequel lesdits éléments de positionnement fixes comprennent six sphères (141, 142, 143, 144, 145, 146) solidaires dudit organe fixe (1), dans lequel, en position de repos, chacun desdits plots touche deux desdites sphères.

## Claims

1. Probe including:
a fixed organ (1);
a feeler (12) held by an elastic element (21) in a resting position relatively to said fixed organ, said resting position being reproducible, said feeler (12) being capable of moving from said resting position in response to a deflective force and capable of returning to said resting position when said force ceases to be applied;
a plurality of mobile positioning elements (131, 132, 133, 134, 135, 136, 231, 232, 233) united with said feeler (12);
a plurality of fixed positioning elements (141, 142, 143, 144, 145, 146) united with said fixed organ and capable of engaging with said mobile positioning elements to define six contact points;
including a plurality of electric conductors (90) connecting the pairs of said fixed and mobile positioning elements to form an electric circuit whose resistance is modified when said feeler (12) is moved from its resting position,
said six contact points are distributed around the axis of said feeler, wherein the angular distance, taking as center the axis of the feeler (12), between two successive contact points is essentially identical for each pair of successive contact points, **characterized in that** said six contact points following said circumference or said closed curve centered around the axis of said feeler (12) part of said fixed positioning elements (141, 142, 143, 144, 145, 156) precede said mobile positioning elements (131, 132, 133, 134, 135, 136, 231, 232, 233) and part of said fixed positioning elements (141, 142, 143, 144, 145, 146) follow said mobile positioning elements.

2. Probe according to claim 1, having essentially uniform sensitivity to deflective forces in an orthogonal plane to said feeler (12).

3. Probe according to claim 1, wherein said angular distance is essentially equal to 60°.

4. Probe according to claim 1, wherein said angular distance is comprised between 50° and 70°.

5. Probe according to claim 1, wherein said angular distance is comprised between 40° and 80°.

6. Probe according to any of the preceding claims, wherein said mobile positioning elements comprise six pins (131, 132, 133, 134, 135, 136) and wherein said fixed positioning elements comprise six spheres (141, 142, 143, 144, 145, 146) united with said fixed organ (1), wherein, in resting position, each of said pins touches one of said spheres.

7. Probe according to claim 6, wherein said pins are arranged radially relatively to the axis of said feeler (12).

8. Probe according to claim 6, wherein said pins are arranged in parallel pairs, along three directions, essentially separated angularly by 120° from one another.

9. Probe according to claim 6, wherein said pins are arranged in pairs converging outwards, in an arrangement essentially symmetrical by 120° rotations.

10. Probe according to claim 6, wherein said pins are arranged in three pairs, in an arrangement essentially symmetrical by 120° rotations, each pair comprising two said pins, each of which touches one of said spheres.

11. Probe according to claim 10, wherein the pins of each pair each touch one of said spheres according to the same angle.

12. Probe according to according to any of the claims 1 to 5, wherein said mobile positioning elements include six spheres (341, 342, 343, 344, 345, 346) and wherein said fixed positioning elements include six pins (331, 332, 333, 334, 335, 336) united with said fixed organ (1), in which, in resting position, each of said pins touches one of said spheres.

13. Probe according to according to any of the claims 1 to 5, wherein said mobile positioning elements include three blocks (231, 232, 233) and wherein said fixed positioning elements include six spheres (141, 142, 143, 144, 145, 146) united with said fixed organ (1), wherein, in resting position, each of said blocks touches two said spheres.

## Patentansprüche

1. Messkopf enthaltend:
ein festes Teil (1);
einen Messfühler (12), der durch ein elastisches Element (21) in einer Ruheposition relativ zu besagtem festem Teil gehalten wird, besagte Ruheposition ist wieder herstellbar, besagter Messfühler (12) ist fähig, sich aus der Ruheposition als Antwort auf eine ablenkende Kraft zu bewegen, und ist fähig, zu besagter Ruheposition zurückzukehren, wenn besagte Kraft aufhört, angewandt zu werden,
eine Vielzahl von beweglichen Positionselementen (131, 132, 133, 134, 135, 136, 231, 232, 233), die mit dem Messfühler (12) verein sind,
eine Vielzahl von festen Positionselementen (141, 142, 143, 144, 145, 146), die mit besagten festen Teil vereint sind, und fähig sind, sich mit besagtem beweglichen Positionselementen zu verbinden, um sechs Kontaktpunkte zu definieren;
besagte sechse Kontaktpunkt sind um die Achse von dem besagten Messfühler verteilt, wobei der Winkelabstand von der Achse des Messfühlers (12) aus zwischen zwei nachfolgenden Kontaktpunkten im Wesentlichen identisch für jedes Paar von nachfolgenden Kontaktpunkten ist, **gekennzeichnet dadurch, dass** besagte sechs Kontaktpunkte besagtem Umfang oder besagter geschlossener Kurve um die Achse des Messfühlers (12) einem Teil der festen Positionselemente (141, 142, 143, 144, 145,156) vor den besagten beweglichen Positionselementen (131, 132, 133, 134, 135, 136, 231, 232, 233) folgen, und ein Teil der festen Positionselementen (141, 142, 143, 144, 145, 146) den besagten beweglichen Positionselementen folgen.

2. Messkopf gemäss Anspruch 1, mit im Wesentlichen einer gleichmässigen Empfindlichkeit in Bezug auf die ablenkende Kraft in einer rechtwinkligen Ebene zu besagtem Messkopf (12).

3. Messkopf gemäss Anspruch 1, in welchem besagter Winkelabstand im Wesentlichen 60° ist.

4. Messkopf gemäss Anspruch 1, in welchem besagter Winkelabstand im Wesentlichen zwischen 50° und 70° ist.

5. Messkopf gemäss Anspruch 1, in welchem besagter Winkelabstand im Wesentlichen zwischen 40° und 80° ist.

6. Messkopf gemäss irgendeinem der vorangehenden Ansprüche, in welchem besagte bewegliche Positionselemente sechs Pins (131, 132, 133, 134, 135, 136) umfassen und wobei besagtes feste Positionselemente sechs Bereiche (141, 142, 143, 144, 145, 146) umfassen, die mit besagten festen Teil (1) vereint sind, wobei in der Ruheposition jeder der Pins einen der besagten Bereiche berührt.

7. Messkopf gemäss Anspruch 6, wobei die Pins radial relativ zu der Achse des besagten Messkopfes (12) angeordnet sind.

8. Messkopf gemäss Anspruch 6, wobei besagte Pins in parallelen Paaren in drei Richtungen angeordnet sind, im Wesentlichen durch eine 120°-Winkel von einander getrennt.

9. Messkopf gemäss Anspruch 6, wobei besagte Pins in parallelen Paaren nach aussen konvertierend in einer Anordnung im Wesentlichen symmetrisch durch 120°-Rotationen angeordnet sind.

10. Messkopf gemäss Anspruch 6, wobei besagte Pins in drei Paaren angeordnet sind, in einer Anordnung im Wesentlichen symmetrisch durch 120°-Rotationen, jedes Paar umfasst zwei Pins, jedes Paar berührt ein Bereich.

11. Messkopf gemäss Anspruch 10, wobei jeder Pin von jedem Paar ein der besagten Bereichs entsprechend demselben Winkel berührt.

12. Messkopf gemäss einem der Ansprüche 1 bis 5, wobei besagte bewegliche Positionselemente sechs Bereiche (341, 342, 343, 344, 345, 346) enthalten, und wobei besagte sechs feste Positionselemente sechs Pins (331, 332, 333, 334, 335, 336) enthalten, die mit besagten festen Teil verbunden sind, in welchem jeder der besagten Pins in der Ruheposition einen der besagten Bereiche berührt.

13. Messkopf gemäss einem der Ansprüche 1 bis 5, wobei besagte bewegliche Positionselemente drei Blöcke (231, 232, 233) enthalten, und wobei besagte sechs feste Positionselemente sechs Pins (331, 332, 333, 334, 335, 336) enthalten, die mit besagten festen Teil verbunden sind, in welchem jeder der besagten Blöcke in der Ruheposition einen der besagten Bereiche berührt.
